# EUROPEAN PATENT SPECIFICATION

(11) **EP 0 516 829 B1**
(45) Date of publication and mention of the grant of the patent: **14.08.1996**
(21) Application number: 92903427.0
(22) Date of filing: 17.12.1991
(51) Int. Cl.: H04N 1/21, H04N 5/225

(54) **METHOD AND APPARATUS FOR AUTOMATIC EXPOSURE CONTROL IN AN ELECTRONIC IMAGING SYSTEM**
VERFAHREN UND VORRICHTUNG ZUR AUTOMATISCHEN BELICHTUNGSREGELUNG IN EINEM ELEKTRONISCHEN BILDERZEUGUNGSSYSTEM
PROCEDE ET APPAREIL DE COMMANDE AUTOMATIQUE DE L'EXPOSITION DANS UN SYSTEME D'IMAGERIE ELECTRONIQUE

(30) Priority: 24.12.1990 US 633133
(43) Date of publication of application: 09.12.1992
(73) Proprietor: EASTMAN KODAK COMPANY, Rochester, New York 14650-2201 (US)
(72) Inventor: HILLS, Robert, G., Spencerport, NY 14559 (US); SASSON, Steven, J., Hilton, NY 14468 (US)
(74) Representative: Blickle, K. Werner, Dipl.-Ing.
(86) International application number: US9109504
(87) International publication number: WO9211727

(56) References cited:
- EP-A- 0 323 194
- US-A- 3 934 161
- Patent Abstracts of Japan, unexamined applications, E field, vol. 13, no. 450, October 11, 1989, The Patent Office Japanese Government, page 90 E 830, Kokai-no. 1-174 175 ( KYOCERA ) 10 July 1989
- Patent Abstracts of Japan, unexamined applications, E field, vol. 9, no. 280, November 8, 1985, The Patent Office Japanese Government, page 83 E 356, Kokai- no. 60-123 169 (MATSUSHITA), 01 July 1985

## Description

### TECHNICAL FIELD

The invention relates in general to a method and apparatus for providing automatic exposure control in an electronic imaging system. In particular, the invention relates to an apparatus for providing automatic exposure control, and method of operating the same, that is capable of operating over a large photographic space and a wide range of exposure conditions without utilizing moving components.

### Background Art

The introduction of electronics in the field of imaging has led to the expectation by consumers that the imaging systems they purchase will function with a high degree of reliability. Thus, system reliability has become a primary factor in producing commercially successful imaging systems. The primary reliability problem of electronic imaging systems, however, has little to do with the electronic components of the system. Electronic components, such as CCD electronic imaging devices and microprocessor controllers, have advanced to the point where they generally function with a high degree of reliability once they have passed an initial "burn in" test phase. The primary reliability problem associated with imaging systems remains the moving mechanical components of the system, such as mechanical shutters, focusing mechanisms and diaphragm devices for setting apertures, that function in conjunction with the electronic components.

Electronic imaging systems have been developed that do eliminate the need for various moving mechanical components. Fixed focus lens systems are readily available that provide a large range of subject distance without requiring focusing adjustment. It has also been long recognized in the art that electronic imaging devices can be operated in a manner to provide an electronic shuttering operation, thereby eliminating the need for a mechanical shutter devices. U.S. Patent 3,934,161 issued to Caywood on January 20, 1976, for example, discloses an electronic shutter for a charge-coupled imager. A reliable non-moving substitute for a mechanical diaphragm to set the aperture of the imaging system, however, has not been developed to date.

In the Patent Abstracts of Japan, Vol. 13, No. 450, the JP-A-1 174 175 also shows an automatic exposure controller for electronic camera, in which the sensitivity of a photometric exposure sensing circuit is manually controlled by switches to set exposure time of the imager and the aperture of the optical system as well as flash exposure in response to the intensity of scene light. The aperture is mechnically driven by a motor.

It is an object of the invention to provide a method and apparatus for providing automatic exposure control that does not utilize moving parts as components of the exposure control system. It is a further object of the invention to provide a method and apparatus for providing automatic exposure control that is capable of operating over a wide range of exposure conditions.

### Summary of the Invention

The invention provides an apparatus for providing electronic exposure control, and a method of operating the same, that contains no moving parts. The invention is based on the recognition that an electronic imaging device, such as a CCD imager, can be operated in a manner to provide both shuttering and aperture control functions.

The invention is accomplished by an electronic imaging system according to claim 1 and by a method according to claim 7.

In operation, the intensity of scene light is measured by the detector. The gain of the variable gain amplifier is then set by the exposure control unit based on the measured intensity of the scene light. The exposure control unit then determines a shutter speed based on the set gain of the variable gain amplifier and the measured intensity of the scene light and controls the exposure of the electronic imaging device to the scene light. The operation of the electronic imaging device is then controlled by the exposure control unit in response to the determined shutter speed.

### Brief Description of the Drawings

With the above as background, reference should now be made to the following detailed description of the preferred embodiment and the accompanying drawings, in which:
Fig. 1 is a block diagram of an electronic imaging system in accordance with the invention,
Fig. 2 is a graph that illustrates the effective shutter speed of the imaging system shown in Fig. 1, and
Fig. 3 is a flow chart illustrating the operation of the electronic imaging system shown in Fig. 1.

### Detailed Description of the Preferred Embodiment

The invention provides an electronic imaging system that covers a large photographic space while having no moving parts. Photographic space is normally controlled by lens focus, shutter speeds, and aperture setting. As described above, fixed focus lens systems are available that will provide a large range of subjects distances and electronic imagers can be electronically controlled to provide a shuttering operation. The invention, however, also controls the gain of the electronic imager such that the equivalent speed of the imager can be varied for various light levels as will be described in greater detail below.

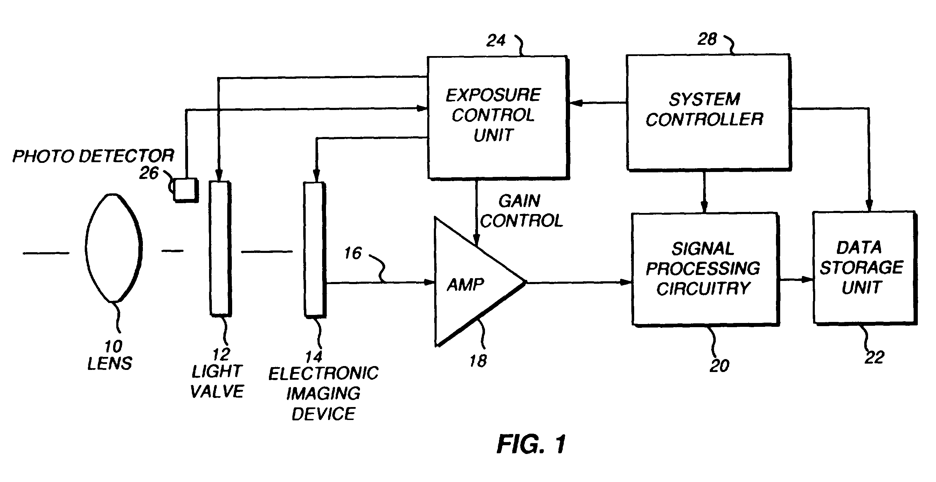

Referring now to Fig. 1, an electronic imaging system in accordance with the present invention is shown that includes a lens 10, an electronic imaging device 14 having an output line 16 coupled to an associated variable gain amplifier 18, signal processing circuitry 20 coupled to the output of the variable amplifier 18, and a data storage unit 22 coupled to the output of the signal processing circuitry 20. The lens 10 is preferable a fixed focus 12.5 mm f/2.8 lens with a circle of confusion of 35 um that provides a focused depth of field from between three feet to infinity. The electronic imaging device 14 is a conventional CCD imager having a plurality of pixel elements which can be preferably operated in a manner to provide an electronic shuttering function. Alternatively, an electronic light valve 12, preferable a liquid crystal device that becomes transparent upon the application of a control signal, can be utilized to provide the shuttering function. The signal processing circuitry 20 includes conventional circuitry that converts the analog output of the variable gain amplifier 18 to a desired digital data format. The data storage unit 22 preferable consists of a memory card having a plurality of memory devices for storing digital data supplied by the signal processing circuitry 20.

The operations of the electronic light valve 12, the electronic imaging device 14 and the variable gain amplifier 18 are controlled by an exposure control unit 24 based on a light measurement signal that is received from a photodetector 26, while the overall operation of the electronic imaging system is controlled by a system controller 28. The exposure control unit 24 and the system controller 28 are preferably microprocessor based units. Alternatively, a single microprocessor based control unit can be provided to control both the exposure control function and overall system operation. It should also be noted that while the photodetector 26 is schematically illustrated as a separate device, one or more pixel elements of the electronic imaging device 14 can be used to perform a light measurement operation.

The operation of the illustrated electronic imaging system will now be described in greater detail. Upon receipt of an initiation signal from an operator input (not shown), the system controller 28 sends a command signal to the exposure control unit 24 to start an exposure sequence. The exposure control unit 24 receives a light measurement signal from the photodetector 26. Based on the light measurement signal, the exposure control unit 24 determines a desired shutter speed for the electronic imaging device 14 and a proper gain setting for the variable gain amplifier 18. The exposure control unit 24 then supplies a command signal to the light valve 12 rendering it transparent an exposing the electronic imaging device 14 to scene light. The electronic imaging device 14 integrates the scene light and supplies an analog output signal to the variable gain amplifier 18 via the output line 16. The variable gain amplifier 18 amplifies the analog output signal received from the electronic imaging device 14 and supplies the amplified analog signal to the signal processing circuitry 20. The signal processing circuitry 20, under the control of the system controller 28, converts the amplified analog signal received from the variable gain amplifier 18 to digital data. The digital data is then stored in the data storage unit 22 under the control of the system controller 28.

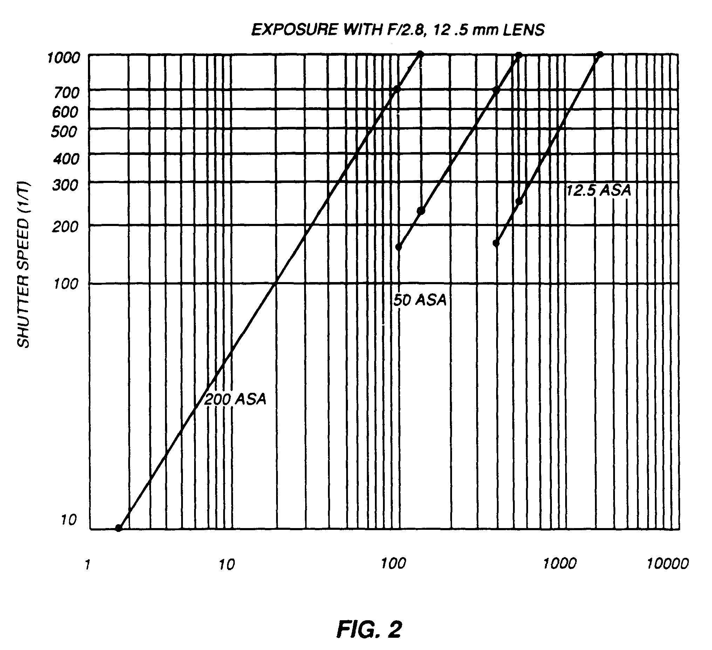

The basis for the determination of a correct shutter speed and gain setting by the exposure control unit 24 will be described with reference to Fig. 2. The electronic imaging device 14 preferably provides electronic shutter speeds form 1/10 to 1/1000 of a second. Changes in the gain setting of the variable amplifier 18 effectively changes the overall exposure speed (ASA) of the electronic imaging system. Three gain settings are illustrated in Fig. 2 which respectively result in an effective speed of 200 ASA, 50 ASA and 12.5 ASA for the electronic imaging system. If the light measurement signal indicates incident light at between 1.5 and 150 foot Laments (FL), the exposure control unit 24 accomplishes proper exposure by setting the variable amplifier 18 at the first gain setting and controlling the electronic imaging device 14 to provide shutter speeds in the range of 1/10 to 1/1000 of a second. Proper exposure cannot be accomplished at the first gain setting once the measured light level exceeds about 150 FL, however, as the electronic imaging device 14 cannot exceed a shutter speed of 1/1000 of a second. The exposure control unit 24 therefore switches the variable amplifier 18 to the second gain setting, thereby decreasing the gain of the variable amplifier 18, for light measurements over 150 FL. Proper exposure can then be accomplished as decreasing the gain of the variable amplifier 18 permits the shutter speed of the electronic imaging device 14 to be slowed to 1/250 of a second as is illustrated in Fig. 2. The gain setting must be adjusted once again to a third gain setting when the light level exceeds 550 FL, thereby giving the system a 12.5 ASA and dropping the shutter speed once again to 1/250 of a second.

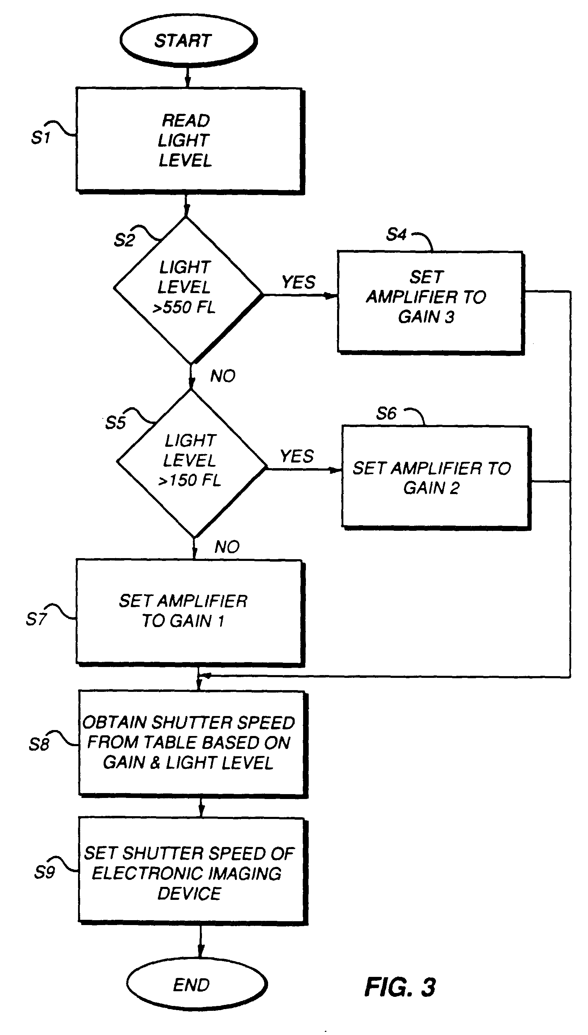

A simple flow diagram of the setting of the gain of the variable gain amplifier 18 and the shutter time of the electronic imaging device by the exposure control unit 24 is illustrated by Fig. 3. The exposure control unit 24 obtains a light level reading from the photodetector 26 at step S1. The exposure control unit 24 determines whether the light level exceeds 550 FL at step S2. If the light level is greater than 550 FL, the exposure control unit 24 sets the gain of the variable gain amplifier 18 at the first gain setting at step S3. Operation then jumps to set S8 which will be described in greater detail below. If the light level does not exceed 550 FL at step S2, the exposure control unit 24 determines if the light level exceeds 150 FL at step S5. If the light level is greater than 150 FL, the exposure control unit 24 sets the gain of the variable gain amplifier 18 to the second gain setting at step S6. Operation then proceeds to step S8. If the light level does not exceed 150 FL in step S5, the exposure control unit 24 sets the gain of the variable gain amplifier 18 to the first gain setting. Operation then proceeds to step S8, where the exposure control unit 24 preferably uses a look-up table, previously loaded in the exposure control unit 24, to obtain the desired shutter speed based on the gain setting and the measured light level. The exposure control unit 24 then sends a command to the light valve 12 rendering it transparent and controls the shutter speed of the electronic imaging device 14 in step S9.

The invention is particularly suited for implementation in a hand-held electronic still camera. The provision of the fixed lens, light valve, shutter and aperture control via the electronic imaging device, and the use of a memory card for the data storage unit, results in an extremely reliable camera that has no moving parts.

The invention has been described with reference to certain preferred embodiments thereof. It will be understood, however, that modifications and variations are possible within the scope of the appended claims. It will be readily understood by those of ordinary skill in the art that the invention is not limited to the specific speeds or gain changes illustrated in Fig. 2 and any desired system speed can be obtained changing the gain of the variable amplifier by differing amounts and intervals. In addition, the invention is not limited to the specific structural elements disclosed for exposing the electronic imaging device. For example, a mechanical shutter mechanism could be employed instead of using the CCD or light valve 12 to perform the shuttering function, although this would be less desirable. An analog circuit could also be used to set shutter time instead of using a look-up table. For example, the gain setting could be used to set a variable resistor in an R-C circuit that is charged with a photodetector and trips the shutter when the voltage on the capacitor reaches a predetermined level. Finally, while certain elements have been illustrated as separate devices for clarity, the elements may be combined into one device. For example, the variable gain amplifier can be structurally implemented as part of the electronic imaging device in a single circuit package.

## Claims

1. An electronic imaging system including an electronic imaging device (14) that produces an output image signal from a plurality of pixel elements, detector means (26) for measuring the intensity of scene light, and exposure means (10) for exposing the electronic imaging device (14) to the scene light, said system characterized by:
a variable gain amplifier (18) coupled to an output line of the electronic imaging device (14) for amplifying the output image signal received from the electronic imaging device; and
an exposure control unit (24) coupled to the detector means (26), the electronic imaging device (14) and the variable amplifier (18), wherein the exposure control unit (24) controls the gain of the variable amplifier (18) to set the equivalent speed of the electronic imaging device, and further controls the shutter speed of the electronic imaging device (14) based on the intensity of scene light measured by said detector means (26).

2. An electronic imaging system as claimed in claim 1, further comprising signal processing circuitry (20) coupled to an output of the variable amplifier (18).

3. An electronic imaging system as claimed in claim 2, further comprising a data storage unit (22) coupled to an output of the signal processing circuitry (20).

4. An electronic imaging system as claimed in claim 3, wherein the data storage unit (22) comprises a memory card including a plurality of memory devices.

5. An electronic imaging system as claimed in claim 1, wherein the exposure means (10) includes a fixed focus lens.

6. An electronic imaging system as claimed in claim 5, wherein the exposure means (10) includes an electronic light valve (12).

7. A method of providing automatic exposure control in an electronic imaging system including a detection means (26) that measures the intensity of scene light and an electronic imaging device (14) that is exposed to the scene light in order to generate an output image signal from a plurality of pixel elements, said method been characterized by the steps of:
applying the output image signal to a variable gain amplifier (18);
setting the gain of the variable gain amplifier (18) based on the measured intensity of the scene light;
determining a shutter speed based on the set gain of the variable gain amplifier (18) and the measured intensity of the scene light; and
controlling the integration time of the electronic imaging device (14) in response to the determined shutter speed.

## Patentansprüche

1. Elektronisches Bildaufnahmesystem mit einer elektronischen Bildaufnahmeeinrichtung (14), die aus einer Vielzahl von Pixelelementen ein Bildausgangssignal erzeugt, mit einer Einrichtung (26), die die Intensität des Szenenlichts mißt, und mit einer Einrichtung (10), die die elektronische Bildaufnahmeeinrichtung (14) dem Szenenlicht aussetzt, **gekennzeichnet durch**
einen Verstärker (18) mit variablem Verstärkungsfaktor, der mit einem Ausgang der elektronischen Bildaufnahmeeinrichtung (14) verbunden ist, um das von der elektronischen Bildaufnahmeeinrichtung erhaltene Bildausgangssignal zu verstärken, und
eine Belichtungssteuereinheit (24), die mit der Meßeinrichtung (26), der elektronischen Bildaufnahmeeinrichtung (14) und dem variablen Verstärker (18) verbunden ist und den Verstärkungsfaktor des variablen Verstärkers (18) derart steuert, daß die äquivalente Empfindlichkeit der elektronischen Bildaufnahmeeinrichtung eingestellt wird, und die die Verschlußzeit der elektronischen Bildaufnahmeeinrichtung (14) in Abhängigkeit von der Intensität des von der Meßeinrichtung (26) gemessenen Szenenlichts steuert.

2. Elektronisches Bildaufnahmesystem nach Anspruch 1, dadurch gekennzeichnet, daß eine Signalverarbeitungsschaltung (20) an einen Ausgang des variablen Verstärkers (18) angeschlossen ist.

3. Elektronisches Bildaufnahmesystem nach Anspruch 2, dadurch gekennzeichnet, daß eine Datenspeichereinheit (22) an einen Ausgang der Signalverarbeitungsschaltung (20) angeschlossen ist.

4. Elektronisches Bildaufnahmesystem nach Anspruch 3, dadurch gekennzeichnet, daß die Datenspeichereinheit (22) eine mit einer Vielzahl von Speichereinheiten versehene Speicherkarte umfaßt.

5. Elektronisches Bildaufnahmesystem nach Anspruch 1, dadurch gekennzeichnet, daß die Einrichtung (10) ein Fixfokusobjektiv aufweist.

6. Elektronisches Bildaufnahmesystem nach Anspruch 5, dadurch gekennzeichnet, daß die Einrichtung (10) ein elektronisches Lichtventil (12) aufweist.

7. Verfahren für die automatische Belichtungssteuerung in einem elektronischen Bildaufnahmesystem, das eine Einrichtung (26) zum Messen der Intensität des Szenenlichts sowie eine elektronische Bildaufnahmeeinrichtung (14) aufweist, die dem Szenenlicht ausgesetzt wird, um aus einer Vielzahl von Pixelelementen ein Bildausgangssignal zu erzeugen, **dadurch gekennzeichnet,** daß
das Bildausgangssignal an einen Verstärker (18) mit variablem Verstärkungsfaktor angelegt wird,
der Verstärkungsfaktor des variablen Verstärkers (18) in Abhängigkeit von der gemessenen Intensität des Szenenlichts eingestellt wird,
eine Verschlußzeit in Abhängigkeit von dem eingestellten Verstärkungsfaktor des variablen Verstärkers (18) und von der gemessenen Intensität des Szenenlichts bestimmt wird und
die Integrationszeit der elektronischen Bildaufnahmeeinrichtung (14) in Abhängigkeit von der bestimmten Verschlußzeit gesteuert wird.

## Revendications

1. Système de formation d'image électronique comprenant un dispositif de formation d'image électronique (14) qui produit un signal d'image en sortie à partir d'une pluralité d'éléments de pixels, un moyen de détecteur (26) servant à mesurer l'intensité de l'éclairement de la scène, et un moyen d'exposition (10) servant à exposer le dispositif de formation d'image électronique (14) à la lumière de la scène, ledit système étant caractérisé par :
un amplificateur à gain variable (18) couplé à une ligne de sortie du dispositif de formation d'image électronique (14) servant à amplifier le signal d'image en sortie reçu du dispositif de formation d'image électronique ; et
une unité de commande d'exposition (24) couplée au moyen de détecteur (26), au dispositif de formation d'image électronique (14) et à l'amplificateur à gain variable (18), dans lequel l'unité de commande d'exposition (24) commande le gain de l'amplificateur à gain variable (18) afin d'établir la sensibilité équivalente du dispositif de formation d'image électronique et commande de plus la vitesse d'obturation du dispositif de formation d'image électronique (14) sur la base de l'intensité de l'éclairement de la scène mesurée par ledit moyen de détecteur (26).

2. Système de formation d'image électronique selon la revendication 1, comprenant de plus des circuits de traitement de signal (20) couplés à une sortie de l'amplificateur à gain variable (18).

3. Système de formation d'image électronique selon la revendication 2, comprenant de plus une unité de stockage de données (22) couplée à une sortie des circuits de traitement de signal (20).

4. Système de formation d'image selon la revendication 3, dans lequel l'unité de stockage de données (22) comprend une carte mémoire comprenant une pluralité de dispositifs mémoire.

5. Système de formation d'image électronique selon la revendication 1, dans lequel le moyen d'exposition (10) comprend un objectif à focale fixe.

6. Système de formation d'image électronique selon la revendication 5, dans lequel le moyen d'exposition (10) comprend un modulateur de lumière électronique (12).

7. Procédé pour assurer une commande automatique d'exposition dans un système de formation d'image électronique comprenant un moyen de détection (26) qui mesure l'intensité d'éclairement de la scène et un dispositif de formation d'image électronique (14) qui est exposé à la lumière de la scène afin de produire un signal d'image de sortie à partir d'une pluralité d'éléments de pixels, ledit procédé étant caractérisé par les étapes consistant à :
appliquer le signal d'image en sortie à l'amplificateur à gain variable (18) ;
établir le gain de l'amplificateur à gain variable (18) sur la base de l'intensité mesurée de l'éclairement de la scène ;
déterminer une vitesse d'obturateur sur la base du gain établi de l'amplificateur à gain variable (18) et de l'intensité mesurée de l'éclairement de la scène ; et
commander le temps d'intégration du dispositif de formation d'image électronique (14) en réponse à la vitesse d'obturation déterminée.
